# EUROPÄISCHE PATENTSCHRIFT

(11) **EP 1 121 278 B1**
(45) Veröffentlichungstag und Bekanntmachung des Hinweises auf die Patenterteilung: **12.02.2003**
(21) Anmeldenummer: 99955753.1
(22) Anmeldetag: 22.09.1999
(51) Int. Cl.: B60R 25/02

(54) **STEUERVORRICHTUNG FÜR ZÜNDUNG UND LENKUNGSVERRIEGELUNG EINES KRAFTFAHRZEUGS**
CONTROL DEVICE THAT BLOCKS IGNITION AND STEERING IN A MOTOR VEHICLE
DISPOSITIF DE COMMANDE POUR L'ALLUMAGE ET LE BLOCAGE DE LA DIRECTION D'UNE AUTOMOBILE

(30) Priorität: 14.10.1998 DE 19847391
(43) Veröffentlichungstag der Anmeldung: 08.08.2001
(73) Patentinhaber: ROBERT BOSCH GMBH, 70442 Stuttgart (DE)
(72) Erfinder: WACH, Achim, D-71706 Markgroeningen (DE); KAISER, Karl-Heinz, D-71732 Tamm (DE); KLAIBER, Tobias, D-71665 Vaihingen-Guendelbach (DE)
(86) Internationale Anmeldenummer: DE9903019
(87) Internationale Veröffentlichungsnummer: WO00021805

(56) Entgegenhaltungen:
- DE-C- 19 634 627
- DE-C- 19 719 343
- US-A- 5 293 160
- US-A- 5 801 614

## Beschreibung

Die Erfindung betrifft eine Steuervorrichtung für die Zündung und die Lenkungsverriegelung eines Kraftfahrzeugs mit den Merkmalen des Oberbegriffs des Anspruchs 1.

### Stand der Technik

Gegenwärtige Kraftfahrzeuge verfügen über Steuervorrichtungen für die Zündung und die Lenkungsverriegelung eines Kraftfahrzeugs, die wenigstens drei verschiedene Zustände einnehmen können. Ein erster Zustand entspricht dem fahrbereiten Kraftfahrzeug mit eingeschaltetem Motor und entriegelter Lenkung, ein zweiter dem Fahrzeug mit ausgeschaltetem Motor, aber noch entriegelter Lenkung und ein dritter dem Fahrzeug mit ausgeschalteten Motor und verriegelter Lenkung.

Die bekannte Steuervorrichtung umfaßt ein Schaltelement in Form eines Schließzylinders, der zwischen zwei Stellungen mit Hilfe eines Schlüssels drehbar ist, die jeweils dem ersten beziehungsweise zweiten Zustand der Steuervorrichtung entsprechen. Durch Herausziehen des Schlüssels wird die Steuervorrichtung in den dritten Zustand übergeführt.

Die Steuervorrichtung umfaßt ferner Mittel, die anhand der vom Schaltelement eingenommenen Stellung und der Erfassung der Tatsache, daß der Schlüssel steckt beziehungsweise nicht steckt, den Zustand der Steuervorrichtung erfassen und entsprechend diesem Zustand den Motor ein- und ausschalten beziehungsweise die Lenkung ver- und entriegeln.

In jüngerer Zeit kommen in Kraftfahrzeugen zunehmend sogenannte "Passive-Entry"-Systeme in Gebrauch, bei denen der Benutzer anstelle eines Schlüssels einen Transponder verwendet, der mit einer Steuerschaltung des Kraftfahrzeugs kommuniziert, um den Besitzer des Transponders zu legitimieren, so daß dieser das Fahrzeug öffnen, anlassen und fahren kann. Die Kommunikation der Steuerschaltung des Kraftfahrzeugs mit dem Transponder erfolgt zumeist drahtlos; es ist deshalb kein körperlicher Kontakt zwischen dem Transponder und dem Fahrzeug erforderlich, wie er etwa beim Einführen eines Schlüssels in ein Tür- oder Zündschloß des Kraftfahrzeugs stattfindet.

Wenn in einem Fahrzeug ein solcher Transponder eingesetzt wird, ist es wünschenswert, auf einen Schlüssel zur Betätigung der Steuervorrichtung für die Zündung und die Lenkungsverriegelung verzichten zu können, da der Benutzer eines Kraftfahrzeugs naheliegenderweise kein Interesse daran hat, einen Transponder zusätzlich zum vertrauten Schlüssel benutzen zu müssen, um sein Fahrzeug in Betrieb zu nehmen.

Der Verzicht auf den Schlüssel führt aber zu einem gravierenden Sicherheitsproblem. Bei der bekannten Steuervorrichtung, die einen Schließzylinder als Schaltelement umfaßt, ist die Stellung des Schließzylinders für den zweiten und den dritten Zustand der Steuervorrichtung die gleiche. Verzichtet man also bei der bekannten Steuervorrichtung auf den Schlüssel, indem man zum Beispiel den Schließzylinder durch den Drehkörper eines Drehschalters ersetzt, so ist keine Differenzierung zwischen dem zweiten und dritten Zustand der Steuervorrichtung mehr möglich. Damit kann einer der zwei Zustände nicht mehr realisiert werden. Verzichtet man auf den dritten Zustand, so findet keine Verriegelung der Lenkung mehr statt. Dies ist aus versicherungsrechtlichen Gründen nicht zulässig, so daß diese Möglichkeit nicht praktikabel ist. Verzichtet man auf den zweiten Zustand, so daß vom dritten direkt in den ersten umgeschaltet wird, so kann das Kraftfahrzeug nur noch mit einem Spezialfahrzeug abgeschleppt werden, da bei ausgeschaltetem Motor immer auch die Lenkung blockiert ist, und es kann der Fall eintreten, daß infolge einer unbeabsichtigten Bewegung des Schaltelements bei fahrendem Fahrzeug nicht nur der Motor ausgeschaltet, sondern gleichzeitig auch das Lenkrad blockiert wird. Dies ist eine Gefahrenquelle, die nicht hinzunehmen ist.

Aus der US-A-5 293 160 ist ein schlüsselloses Verriegelungssystem für ein Kraftfahrzeug mit den Merkmalen des Oberbegriffs des Anspruchs 1 bekannt. Ein drehbar ausgestaltetes Bedienelement läßt sich von einer Verriegelungsposition über eine ACC-Position und eine On-Position in eine Startposition drehen. Von der Verriegelungsposition in die ACC-Position gelangt man jedoch nur, wenn ein Knopf gedrückt ist. Das drehbar ausgeführte Bedienelement löst in seiner gedrückten Stellung eine Kommunikation mit einer Karte zur Erlangung der Fahrberechtigung aus. Nur wenn der Fahrer eine passende Karte mit sich führt, wird der Knopf freigegeben. Eine Bewegung von der Verriegelungsposition in die ACC-Position wird somit nur möglich, wenn der Knopf freigegeben und gedrückt wurde.

### Vorteile der Erfindung

Die erfindungsgemäße Steuervorrichtung, die in dem Anspruch 1 definiert ist, zeichnet sich demgegenüber dadurch aus, daß sie eine zuverlässige Umschaltung zwischen drei Zuständen erlaubt, ohne daß dafür ein Schlüssel benötigt wird und ohne daß dafür Abstriche an der Sicherheit des Fahrzeugs in Kauf genommen werden müssen.

Gemäß der in Anspruch 1 definierten ersten Lösung ist dabei vorgesehen, daß das Schaltelement eine dem dritten Zustand der Steuervorrichtung entsprechende dritte Stellung einnehmen kann, wobei allerdings die Steuervorrichtung ein Sperrmittel umfaßt, das die Drehung des Schaltelements von der zweiten in die dritte Stellung sperrt, solange nicht ein Erfassungsmittel erfaßt, daß auf das Schaltelement zusätzlich zur Drehkraft auch eine vorgegebene Kraft in Richtung seiner Drehachse ausgeübt wird. Dadurch ist sichergestellt, daß eine ungewollte Drehung alleine niemals zu einer Verriegelung der Lenkung führen kann.

Das Sperrmittel ist zweckmäßigerweise auch gegen die Drehung von der dritten Stellung zurück in die zweite wirksam.

Das Sperrmittel ist elektrisch betrieben und so konstruiert, daß es in stromlosem Zustand wirksam ist beziehungsweise bleibt. Um die Wirkung des Sperrmittels aufzuheben, ist hingegen ein Strom erforderlich. Dadurch ist ausgeschlossen, daß die Steuervorrichtung bei einem Stromausfall (zum Beispiel während der Fahrt) ungewollt in den dritten Zustand übergehen und die Lenkung blockieren kann. Außerdem verhindert diese Maßnahme, daß bei einem unbefugten Zugriff auf das im dritten Zustand abgestellte Fahrzeug die Blockierung der Lenkung aufgehoben werden kann, solange nicht die Stromversorgung des Fahrzeugs eingeschaltet ist.

Gemäß einer bevorzugten Ausgestaltung der Steuervorrichtung weist das Schaltelement zwei Nuten auf, und das Sperrmittel umfaßt einen Riegelbolzen, wobei Riegelbolzen und Sperrmittel so zueinander angeordnet sind, daß der Riegelbolzen im ersten und zweiten Zustand in die erste Nut eingreift und im dritten Zustand das Schaltelement durch Eingreifen in die zweite Nut arretiert.

Zum Verstellen des Riegelbolzens dient vorzugsweise ein elektrisch betriebenes Stellglied, das den Riegelbolzen in stromlosem Zustand in einer der zwei Nuten in Eingriff hält. Dieses Stellglied kann eine Feder und eine Spule zum Ziehen des Riegelbolzens entgegen einer Rückstellkraft der Feder umfassen.

Als ein einfaches Mittel zum Erfassen einer auf das Schaltelement in Richtung seiner Drehachse ausgeübten Kraft kann ein Druckschalter oder Taster dienen, der durch Drücken oder Ziehen des Schaltelements angeschlossen wird.

Zum Ver- und Entriegeln der Lenkung kann an dem Schaltelement ein Exzenter angebracht sein, der beim Übergang des Schaltelements von der zweiten in die dritte Position durch mechanische Drehbewegung einen Sperrzapfen in einen Zahnkranz der Lenkung eindrückt.

Weitere Merkmale und Vorteile der Erfindung ergeben sich aus der nachfolgenden Beschreibung von Ausführungsbeispielen in Verbindung mit den Figuren.

### Figuren

Es zeigen
- Figur 1: teilweise aufgeschnitten in perspektivischer Ansicht ein Einbaumodul für ein Kraftfahrzeug, das einen wesentlichen Teil einer erfindungsgemäßen Steuervorrichtung bildet;
- Figur 2: einen partiellen Schnitt durch das Einbaumodul senkrecht zu dessen Längsrichtung, die das Schaltelement von seiner Rückseite her gesehen zeigt;
- Figur 3: einen Axialschnitt durch das Schaltelement
und
- Figur 4: eine schematische Darstellung einer Steuervorrichtung gemäß einer zweiten Ausgestaltung der Erfindung.

### Beschreibung der bevorzugten Ausgestaltungen

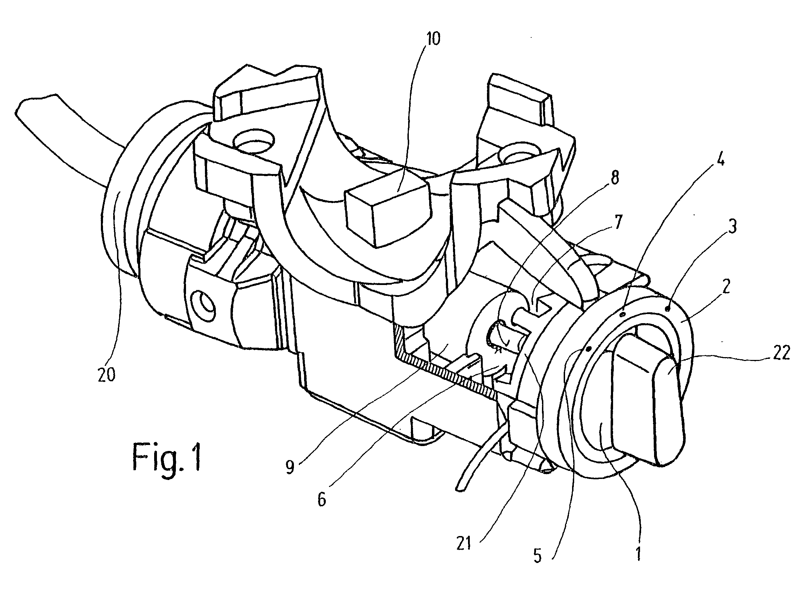

Figur 1 zeigt ein Einbaumodul, das zum Einbau in ein Kraftfahrzeug anstelle eines herkömmlichen Zündschlosses vorgesehen ist. Es umfaßt ein Schaltelement 1 mit einem wesentlichen zylindrischen Körper 21, der in einer Fassung 2 drehbar gelagert ist, und einen vorspringenden Zapfen 22, den der Fahrer des Kraftfahrzeugs greifen kann, um das Schaltelement 1 zwischen verschiedenen Stellungen zu verstellen, die durch Stellungsmarkierungen 3,4,5 an der Fassung 2 kenntlich gemacht sind. In der Figur befindet sich das Schaltelement 1 in einer mittleren Stellung, die der Stellungsmarkierung 4 entspricht, auf die der Zapfen 22 weist.

An der im Inneren des Einbaumoduls liegenden Rückseite des zylindrischen Körpers 21 sind eine erste und eine zweite Nut 6,7 ausgeschnitten. Ein Riegelbolzen 8 ist in einer Spule 9 zwischen seiner in der Figur gezeigten, in eine Nut eingreifenden Position und einer zurückgezogenen Position verstellbar gelagert, in der er aus der Nut ausgerückt ist. In der gezeigten Position des Riegelbolzens 8 ist das Schaltelement 1 zwischen einer ersten Stellung, die der Stellungsmarkierung 3 entspricht, und einer zweiten, der Markierung 4 entsprechenden Stellung frei drehbar. Wenn die Spule 9 mit einem Strom beschaltet ist, zieht sich der Riegelbolzen aus der Nut 6 zurück und ermöglicht so eine Drehung des Schaltelements bis in eine dritte Stellung, die der Stellungsmarkierung 5 entspricht. In dieser Stellung liegt der Riegelbolzen 8 der Nut 7 gegenüber und rückt, durch die Rückstellkraft einer (nicht gezeigten) Feder angetrieben, in die Nut 7 ein, wenn die Stromzufuhr zur Spule 9 unterbrochen wird.

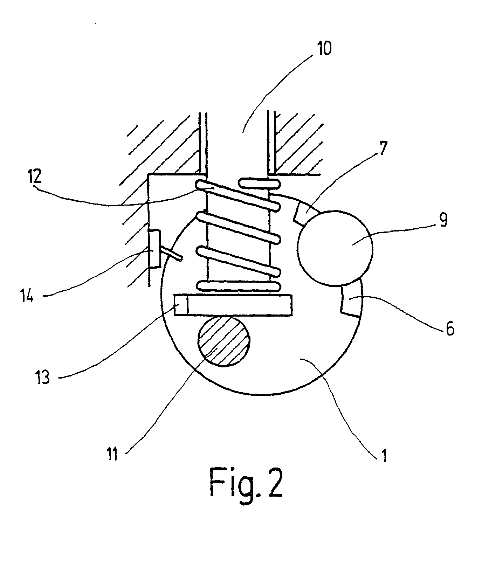

Das Schaltelement 1 trägt an seiner Rückseite einen stiftförmigen Exzenter, der in Figur 1 durch die Spule 9 verdeckt und deshalb nicht sichtbar ist. Der Exzenter 11 wird deshalb mit Bezug auf Figur 2 beschrieben.

Figur 2 zeigt einen Teilschnitt durch das in Figur 1 dargestellte Einbaumodul, in welchem das Schaltelement 1 von seiner Rückseite zu sehen ist. Man erkennt die zwei Nuten 6,7 und die Spule 9. Die Spule 9 ist mit dem in Figur 2 nicht gezeigten Gehäuse des Einbaumoduls fest verbunden. Der Exzenter 11 ist mit dem Schaltelement 1 fest verbunden und erstreckt sich von diesem aus in Richtung der Längsachse des Einbaumoduls, das heißt senkrecht zu der Zeichnungsebene der Figur 2. Ein Sperrzapfen 10, der in Figur 2 nur zum Teil dargestellt ist, wird von einer Spiralfeder 12 gegen den Exzenter 11 gedrückt gehalten.

Alternativ zur Darstellung in Figur 2 kann der Sperrzapfen in der Figur nach unten über den Exzenter 11 verlängert und von einer an seinem unteren Ende angreifenden Zugfeder in der Figur abwärts gezogen werden, wobei in diesem Fall der Exzenter in eine Aussparung des Sperrzapfens eingreift.

Die Position des Exzenters 11 am Schaltelement 1 ist so gewählt, daß sich die Stellung des Sperrzapfens 10 bei einer Drehung des Schaltelements 1 aus der dargestellten zweiten Stellung in die dritte, das heißt bei einer Drehung im Gegenuhrzeigersinn in Figur 2, wenig ändert, wohingegen bei einem Übergang des Schaltelements 1 in die erste Stellung, also einer Drehung im Uhrzeigersinn, der Sperrzapfen 10 über ein beträchtliches Wegstück aufwärts bewegt wird, welches ausreicht, um das obere Ende des Sperrzapfens 10 (in Figur 1 gezeigt) in eine Aussparung eines mit der Lenkung des Fahrzeugs fest verbundenen Zahnkranzes einrücken zu lassen. Auf diese Weise ist die Lenkung des Fahrzeugs verriegelt, wenn sich das Schaltelement in der ersten Stellung befindet.

Ein Schalter 14 (siehe Figur 2) ist im Einbaumodul so angeordnet, daß er beim Übergang des Schaltelements in die erste Stellung von einer Nase 13 des Sperrzapfens 10 mitgenommen und umgeschaltet wird. Wenn das Schaltelement 1 die erste Stellung wieder verläßt und der Sperrzapfen 10 sich infolgedessen abwärts bewegt, kehrt der Schalter 14 selbsttätig in seine Ausgangsstellung zurück.

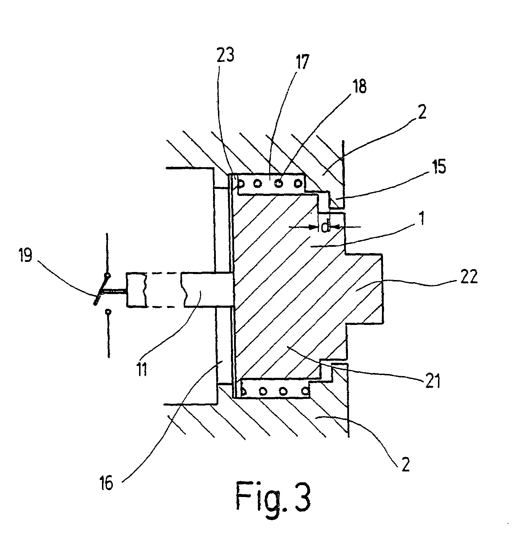

Figur 3 zeigt das Schaltelement 1 in seiner Fassung 2 im axialen Schnitt. Man erkennt hier, daß der zylindrische Körper 21 des Schaltelements zwischen zwei Vorsprüngen 15,16 der Fassung 2 über eine geringe Strecke d axial verschiebbar gehalten ist. Diese Strecke d ist kleiner als die Eingreiftiefe des Riegelbolzens in eine der Nuten 7 oder 8, so daß der Riegelbolzen durch axiales Verschieben des Schaltelements allein nicht aus einer Nut freikommt. In einem ringförmigen Hohlraum 17 zwischen dem Körper 21 und den Wänden der Fassung 2 ist eine Spiralfeder 18 angeordnet, die eine Druckkraft auf eine umlaufende Krempe 23 des Schaltelements 1 ausübt und es so in der in der Figur gezeigten Stellung hält. Der Fahrer des Kraftzeugs kann den Zapfen 22 greifen, dadurch das Schaltelement 1 zu sich heranziehen und auf diese Weise einen Schalter 19 zeitweilig schließen. Der Schalter 19 ist in der Figur an einer Verlängerung des Exzenters 11 dargestellt, kann aber in beliebiger Weise mit dem Schaltelement 1 so gekoppelt sein, daß er durch Ziehen an diesem umgeschaltet wird.

Alternativ kann das Schaltelement 1 auch so in der Fassung 2 gelagert sein, daß es vom Fahrer in die Fassung hineingedrückt werden kann, um auf diese Weise einen Schalter wie den Schalter 19 zu betätigen.

Wie Figur 1 zeigt, ist in das Einbaumodul auch ein Zündschalter 20 integriert. Die Drehbewegung des Schaitelements 1 wird auf diesen durch den Exzenter 11 übertragen, so daß der Zündschalter 20 beim Übergang des Schaltelements von der zweiten Stellung (Stellungsmarkierung 4) in die erste Stellung (Stellungsmarkierung 3) bzw. umgekehrt die Zündung des Kraftfahrzeugs ein- bzw. ausschaltet.

Nachdem die verschiedenen Komponenten der erfindungsgemäßen Steuervorrichtung vorgestellt worden sind, soll nun deren Zusammenwirken beschrieben werden. Dabei wird ausgegangen von einem Kraftfahrzeug, das mit einem "Passive-Entry"-System ausgestattet ist, wobei die Erfindung aber nicht auf das Vorhandensein eines solchen Systems angewiesen ist.

Wenn sich eine Person, die im Besitz eines geeigneten Transponders ist, einem solchen Fahrzeug nähert, kann sie durch Drücken einer Taste des Transponders oder durch Ziehen des Türgriffs einen ersten Datenaustausch zwischen dem Transponder und einer Steuerschaltung des Kraftfahrzeugs in Gang setzen, die zur Folge hat, daß bei erfolgreicher Legitimation des Transponders die Steuerschaltung die Türschlösser des Fahrzeugs freischaltet, so daß der Benutzer einsteigen kann. Nach dem Einsteigen findet ein zweiter Datenaustausch statt, in dessen Verlauf die Legitimation des Benutzers zum Anlassen des Fahrzeugs überprüft wird. Diese Kommunikation kann zum Beispiel ausgelöst werden, wenn die Steuerschaltung das Schließen der Fahrertür erfaßt, oder wenn der Benutzer das Schaltelement 1 axial verschiebt, um so den Schalter 19 zu betätigen.

Das axiale Verschieben ist bei dem in Figur 3 gezeigten Schaltelement 1 ein Ziehen, doch können, wie gesagt, das Schaltelement und seine Fassung so konstruiert sein, daß das Schaltelement stattdessen eingedrückt werden kann.

Zu dieser Zeit befindet sich das Schaltelement 1 in seiner dritten Stellung, die Spule 9 ist stromlos und der Riegelbolzen 8 infolgedessen in die zweite Nut 7 eingefahren, so daß er eine Drehung des Schaltelements 1 in eine andere Stellung blockiert. Der Sperrzapfen 10 ist in die Lenkung eingerastet, der Zündschalter 20 ist ausgeschaltet.

Die Funktion des Schalters 19 ist unterschiedlich, je nachdem, ob die Steuerschaltung die Legitimation des Benutzers direkt nach dem Einsteigen oder erst aufgrund des Ziehens des Schaltelements 1 überprüft. Im ersten Fall versorgt die Steuerschaltung einen ersten Anschluß des Schalters 19 mit Spannung, wenn die Überprüfung der Legitimation positiv verlaufen ist. Der andere Anschluß des Schalters 19 ist mit der Spule 9 verbunden, so daß bei geschlossenem Schalter 19 ein Strom durch die Spule 9 fließt und der Riegelbolzen 8 aus der Nut 7 herausgezogen wird. Hierdurch wird das Schaltelement 1 freigegebenen, und der Fahrer kann es in die zweite und die erste Stellung drehen. Wenn er nach dem Drehen das Schaltelement 1 losläßt, öffnet sich der Schalter 19, die Spule 9 wird stromlos und der Riegelbolzen 8 greift in die Nut 6 ein.

Im zweiten Fall ist der Schalter 19 direkt an die Steuerschaltung angeschlossen, so daß diese in der Lage ist, die Betätigung des Schalters 19 zu erfassen und daraufhin einen Datenaustausch mit dem Transponder des Benutzers auszuführen, um dessen Legitimation zum Anlassen des Fahrzeugs zu überprüfen. Wenn die Überprüfung positiv ausfällt, versorgt die Steuerschaltung die Spule 9 mit Strom, so daß diese den Riegelbolzen 8 aus der ersten Nut 7 herauszieht. Nun kann der Benutzer das Schaltelement 1 in die zweite oder erste Stellung drehen. Wenn er das Schaltelement losläßt, so daß der Schalter 19 sich wieder öffnet, unterbricht die Steuerschaltung die Stromversorgung der Spule 9, und der Riegelbolzen 8 greift in die erste Nut 6 ein.

Durch Drehen des Schaltelements 1 in die zweite Stellung (Stellungsmarkierung 4) hat der Benutzer den Exzenter 11 so weit bewegt, daß der Sperrzapfen 10, angetrieben von der Feder 12, aus dem Zahnkranz der Lenkung ausrücken und diese freigeben kann. Elektrische Verbraucher des Fahrzeugs, die nur bei fahrendem Fahrzeug benötigt werden, wie etwa Fernund Abblendlicht, Armaturenbeleuchtung etc. sind in der zweiten Stellung noch nicht mit Strom versorgt. Diese werden zugeschaltet, wenn der Benutzer das Schaltelement 1 in eine (nicht dargestellte) Zwischenstellung zwischen der zweiten und der ersten Stellung (Stellungsmarkierung 3) weitergedreht hat.

Wenn das Schaltelement 1 die erste Stellung (Stellungsmarkierung 3) erreicht, schließt der Zündschalter 20, und das Fahrzeug ist fahrbereit.

Während das Fahrzeug fährt, ist es zwar möglich, den Motor durch Zurückdrehen des Schaltelements in die zweite Stellung auszuschalten, die Lenkung kann jedoch nicht verriegelt werden, ohne daß der Fahrer gleichzeitig das Schaltelement 1 mechanisch herauszieht.

Dabei kann als zusätzliche Sicherungsmaßnahme vorgesehen werden, daß die Steuervorrichtung den Bewegungszustand des Fahrzeugs erfaßt und die Spule 9 auf jeden Fall stromlos hält, solange sie erfaßt, daß sich das Fahrzeug bewegt. Die stromlose Spule zieht den Riegelbolzen 8 nicht aus der Nut 6, so daß das Schaltelement zwar herausgezogen, aber nicht in den dritten Zustand gedreht werden kann.

Am Ende einer Fahrt stellt der Benutzer das Schaltelement 1 zunächst von der ersten in die zweite Stellung zurück und schaltet so die Zündung aus. Die Steuerschaltung erfaßt anhand der Stellung des Schalters 14, der noch nicht in Kontakt mit der Nase 13 des Sperrzapfens 10 ist, daß die Lenkung nicht verriegelt ist, und erzeugt ein optisches oder akustisches Warnsignal, um den Benutzer aufzufordern, das Schaltelement bis in die dritte Stellung weiterzudrehen, in der die Verriegelung wirksam ist. Der Benutzer ist somit nicht gezwungen, die Lenkung zu verriegeln, wenn er das Fahrzeug verläßt, es wird aber verhindert, daß er das Verriegeln vergißt.

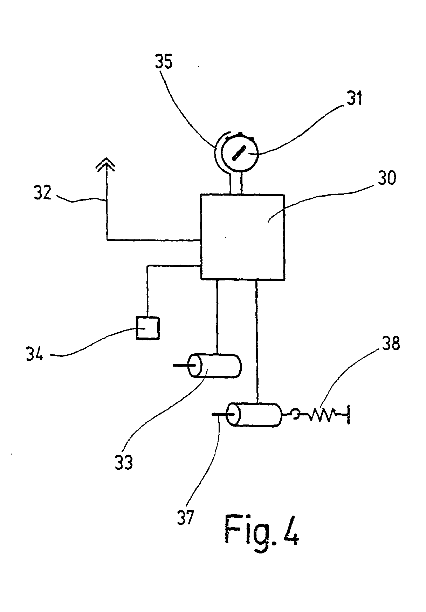

Eine zweite Ausgestaltung der Erfindung ist in Figur 4 schematisch dargestellt. Diese Steuervorrichtung umfaßt ein Schaltelement 31, das zwischen zwei Stellungen drehbar ist. Eine Steuerschaltung 30 ist mit dem Schaltelement 31 verbunden, um dessen Stellung abzufragen. Diese Steuerschaltung 30 versieht gleichzeitig die Funktionen eines "Passive-entry"-Systems und ist zu diesem Zweck mit einer äußeren Antenne 32 außerhalb der Fahrgastzelle des Kraftfahrzeugs verbunden, über die ein erster Datenaustausch mit einem Transponder eines außerhalb des Fahrzeugs befindlichen Benutzers durchgeführt werden kann. Wenn dieser Datenaustausch ergibt, daß der Benutzer legitimiert ist, die Tür zu öffnen, betätigt die Steuerschaltung 30 eine Türverriegelungseinrichtung 33, die in der Figur schematisch als eine Spule mit einem Sperrzapfen dargestellt ist, so daß der Benutzer die Tür öffnen kann, ohne dafür einen Schlüssel gebrauchen zu müssen, und einsteigen kann. Ein Sensor 34 erfaßt das Öffnen und Schließen der Tür. Durch das Schließen der Tür wird ein zweiter Datenaustausch zwischen dem Transponder des Benutzers und der Steuerschaltung 30 ausgelöst, der über eine in der Fahrgastzelle angeordnete Antenne 35 abläuft. Diese Antenne kann eine in einer Fassung des Schaltelements 31 angeordnete Ringantenne sein.

Wenn der Datenaustausch ergibt, daß der Benutzer legitimiert ist, das Fahrzeug anzulassen, hebt die Steuerschaltung 30 eine zuvor wirksame Wegfahrsperre auf und unterbricht gleichzeitig die Stromversorgung einer Spule 36, woraufhin eine Zugfeder 38 einen Sperrzapfen 37 aus einem Verriegelungskranz (nicht dargestellt) der Lenkung herauszieht und so die Lenkung entriegelt. Auf diese Weise geht die Steuervorrichtung aus einem Zustand, in dem der Motor ausgeschaltet und die Lenkung verriegelt ist, als dritter Zustand bezeichnet, in einen zweiten Zustand über, in dem der Motor und im fahrenden Kraftfahrzeug benötigte elektrische Verbraucher weiterhin ausgeschaltet, die Lenkung aber entriegelt ist. Die Entriegelung der Lenkung erfolgt automatisch, ohne daß der Benutzer dafür die Stellung des Schaltelements 31 ändern muß. Um das Fahrzeug fahrbereit zu machen, dreht der Benutzer das Schaltelement 31, woraufhin die Steuerschaltung 30 zunächst die Stromversorgung der zum Fahren benötigten elektrischen Verbraucher aktiviert und dann, sobald das Schaltelement 31 eine Endstellung erreicht hat, die Zündung des Fahrzeugs einschaltet.

Um das Fahrzeug auszuschalten, dreht der Benutzer das Schaltelement 31 zurück, woraufhin die Steuerschaltung 30 die Zündung und die elektrischen Verbraucher abschaltet. Eine Verriegelung der Lenkung erfolgt nicht. Somit ist ausgeschlossen, daß eine ungewollte Bewegung des Schaltelements während der Fahrt zu einer Blockierung der Lenkung führt. Erst wenn die Steuerschaltung ein Öffnen und Schließen der Tür oder ein Verriegeln der Tür durch den Benutzer mit Hilfe des Sensors 34 erfaßt hat, der Benutzer also höchstwahrscheinlich das Fahrzeug verlassen hat, gibt die Steuerschaltung 30 eine Spannung an die Spule 36 aus, damit diese entgegen der Kraft der Feder 38 den Sperrzapfen 37 in den Zahnkranz der Lenkung einführt und diese so blockiert. Gleichzeitig schaltet die Steuerschaltung die Wegfahrsperre scharf.

## Patentansprüche

1. Steuervorrichtung für die Zündung und Lenkungsverriegelung eines Kraftfahrzeugs, welche einen ersten Zustand, in dem der Motor des Kraftfahrzeugs eingeschaltet und die Lenkung entriegelt ist, einen zweiten Zustand, in dem der Motor ausgeschaltet und die Lenkung entriegelt ist, und einen dritten Zustand einnehmen kann, in dem der Motor ausgeschaltet und die Lenkung verriegelt ist, mit einem Schaltelement (1), das in einer Fassung (2) zwischen einer ersten (3) und einer zweiten Stellung (4) drehbar ist, die dem ersten beziehungsweise zweiten Zustand entsprechen, und mit Mitteln zum Ein- und Ausschalten des Motors (20) und zum Verund Entriegeln der Lenkung (10) entsprechend dem Zustand der Steuervorrichtung, wobei das Schaltelement (1) von der ersten Stellung über die zweite in eine dem dritten Zustand entsprechende dritte Stellung (5) drehbar ist und daß die Steuervorrichtung ein Sperrmittel (8,9) zum Sperren der Drehung von der zweiten (4) in die dritte Stellung (5) und ein Erfassungsmittel (19) zum Erfassen auf das Schaltelement (1) in Richtung seiner Drehachse ausgeübten Kraft umfaßt, **dadurch gekennzeichnet, daß** das Sperrmittel (8,9) elektrisch betrieben und so konstruiert ist, daß es in stromlosem Zustand wirksam ist und wobei Erfassungsmittel (19) das Sperrmittel (8,9) unwirksam macht, wenn es die Kraft erfaßt und das Sperrmittel (8, 9) mit Strom versorgt ist.

2. Steuervorrichtung nach Anspruch 1, **dadurch gekennzeichnet, daß** das Schaltelement (1) zwei Nuten (6,7) aufweist und das Sperrmittel einen Riegelbolzen (8) umfaßt, wobei der Riegelbolzen (8) im zweiten Zustand in die erste Nut (6) eingreift und im dritten Zustand das Schaltelement (1) durch Eingreifen in die zweite Nut (7) arretiert.

3. Steuervorrichtung nach Anspruch 2, **gekennzeichnet durch** elektrisch betriebenes Stellglied zum Verstellen des Risgelbolzens (8), welches konstruiert ist, um den Riegelbolzen (8) in stromlosem Zustand in einer der Nuten (6,7) in Eingriff zu halten.

4. Steuervorrichtung nach Anspruch 3, **dadurch gekennzeichnet, daß** das Stellglied eine Feder und eine Spule (9) zum Ziehen des Riegelbolzens (8) entgegen einer Rückstellkraft der Feder umfaßt.

5. Steuervorrichtung nach einem der vorhergehenden Ansprüche, **dadurch gekennzeichnet, daß** das Erfassungsmittel (19) ein Druckschalter ist, der durch Drücken oder Ziehen des Schaltelements (1) geschlossen wird.

6. Steuervorrichtung nach einem der vorhergehenden Ansprüche, **dadurch gekennzeichnet, daß** die Mittel zum Ver- und Entriegeln der Lenkung einen an dem Schaltelement (1) angebrachten Exzenter (11) zum Ein- und Ausrücken eines Sperrzapfens (10) in einem Zahnkranz der Lenkung umfassen.

## Claims

1. Control device for the ignition and locking of the steering of a motor vehicle, which device can assume a first state, in which the engine of the motor vehicle is switched on and the steering is unlocked, a second state, in which the engine is switched off and the steering is unlocked, and a third state, in which the engine is switched off and the steering is locked, having a switching element (1) which can be rotated in a socket (2) between a first position (3) and a second position (4), said positions corresponding to the first and second state, respectively, and having means for switching the engine (20) on and off and for locking and unlocking the steering (10) in accordance with the state of the control device, it being possible for the switching element (1) to be rotated from the first position via the second position into a third position (5) corresponding to the third state, and the control device containing a blocking means (8, 9) for blocking the rotation from the second position (4) into the third position (5) and a detecting means (19) for detecting force exerted on the switching element (1) in the direction of its axis of rotation, **characterized in that** the blocking means (8, 9) is operated electrically and is designed in such a manner that it is effective when non-energized, and detecting means (19) rendering the blocking means (8, 9) ineffective when it detects the force and the blocking means (8, 9) is supplied with current.

2. Control device according to Claim 1, **characterized in that** the switching element (1) has two grooves (6, 7) and the blocking means comprises a locking bolt (8), the locking bolt (8) in the second state engaging in the first groove (6) and in the third state retaining the switching element (1) by engaging in the second groove (7).

3. Control device according to Claim 2, **characterized by** an electrically operated actuating element for adjusting the locking bolt (8), which element is designed in order to keep the locking bolt (8) engaged in one of the grooves (6, 7) when non-energized.

4. Control device according to Claim 3, **characterized in that** the actuating element comprises a spring and a coil (9) for pulling the locking bolt (8) counter to a restoring force of the spring.

5. Control device according to one of the preceding claims, **characterized in that** the detecting means (19) is a pressure-operated switch which is closed by pushing or pulling the switching element (1).

6. Control device according to one of the preceding claims, **characterized in that** the means for locking and unlocking the steering comprise an eccentric (11), which is mounted on the switching element (1), for engaging a blocking pin (10) in, and disengaging it from, a toothed ring of the steering.

## Revendications

1. Dispositif de commande de l'allumage et du verrouillage de la direction d'un véhicule ayant un premier état dans lequel le moteur du véhicule est en marche et la direction déverrouillée, un second état dans lequel le moteur est coupé et la direction déverrouillée et un troisième état dans lequel le moteur est coupé et la direction verrouillée, comprenant un élément de commutation (1) qui peut tourner dans une douille (2) entre une première (3) et une seconde position (4) correspondant respectivement au premier et au deuxième état, et des moyens pour brancher et couper le moteur (20) et verrouiller et déverrouiller la direction (10) suivant l'état du dispositif de commande, dans lequel
l'élément de commutation (1) peut être tourné de la première position en passant par une seconde position dans une troisième position (5) correspondant au troisième état, et le dispositif de commande comporte un moyen de blocage (8, 9) pour bloquer la rotation de la seconde position (4) vers la troisième position (5) ainsi qu'un moyen de saisie (19) pour saisir la force exercée sur l'élément de commutation (1) en direction de son axe de rotation,
**caractérisé en ce que**
le moyen de verrouillage (8, 9) est à fonctionnement électrique et est réalisé pour être actif lorsque le courant est coupé, et
les moyen de saisie (19) neutraliser le moyen de verrouillage (8, 9) lorsqu'il est soumis à force et que le moyen de verrouillage (8, 9) est alimenté en courant électrique.

2. Dispositif de commande selon la revendication 1,
**caractérisé en ce que**
l'élément de commutation (1) comporte deux rainures (6, 7) et le moyen de verrouillage comporte un goujon de verrouillage (8),
le goujon de verrouillage (8) pénétrant dans la première rainure (6) lorsqu'il est dans le second état et bloquant dans le troisième état l'élément de commutation (1) par pénétration dans la seconde rainure (7).

3. Dispositif de commande selon la revendication 2,
**caractérisé par**
un organe d'actionnement à fonctionnement électrique pour déplacer le goujon de verrouillage (8), cet organe d'actionnement étant réalisé pour maintenir en prise le goujon de verrouillage (8) dans l'une des rainures (6, 7) lorsque le goujon est coupé du courant électrique.

4. Dispositif de commande selon la revendication 3,
**caractérisé en ce que**
l'organe d'actionnement comprend un ressort et une bobine (9) pour tirer le goujon de verrouillage (8) contre la force de rappel exercée par le ressort.

5. Dispositif de commande selon l'une quelconque des revendications précédentes,
**caractérisé en ce que**
le moyen de saisie (19) est un commutateur de pression qui se ferme lorsque l'élément de commutation (1) est poussé ou tiré.

6. Dispositif de commande selon l'une quelconque des revendications précédentes,
**caractérisé en ce que**
les moyen de verrouillage et de déverrouillage de la direction comprennent un excentrique (11) installé sur l'élément de commutation (1) pour engager et dégager un goujon de verrouillage (10) dans une couronne dentée de la direction.
